# EUROPEAN PATENT APPLICATION

(11) **EP 4 769 282 A1**
(43) Date of publication of application: **01.07.2026**
(21) Application number: 24855803.3
(22) Date of filing: 20.08.2024
(51) Int. Cl.: G06Q 30/06

(54) **IMAGE PROCESSING METHOD AND APPARATUS, DEVICE, AND STORAGE MEDIUM**

(30) Priority: 21.08.2023 CN 202311055793
(71) Applicant: Beijing Youzhuju Network Technology Co., Ltd., Beijing 101299 (CN)
(72) Inventor: LAI, Jingzhi, Beijing 100028 (CN); LIU, Xingliang, Beijing 100028 (CN); CAI, Lizhou, Beijing 100028 (CN)
(74) Representative: Isarpatent
(86) International application number: PCT/CN2024/113320
(87) International publication number: WO 2025/040081

(57) **Abstract**

The present disclosure provides an image processing method and apparatus, a device, and a storage medium. The method comprises: in response to a preset image processing request for an image to be processed, identifying (S101) a target object on the image to be processed; receiving (S102) target description information corresponding to the image to be processed, and generating a target virtual image on the basis of the target description information; and then adding (S103) the target virtual image into the image to be processed to obtain a processing result image corresponding to the image to be processed. According to the embodiments of the present disclosure, a target virtual image is generated for a target object on the basis of target description information, and the image to be processed is processed into a processing result image for displaying the target object on the basis of the target virtual image.

## Description

### CROSS-REFERENCE TO RELATED APPLICATION(S)

The present application claims the benefit of Chinese Patent Application No. 202311055793.2, filed on August 21, 2023. The entire teachings of the above-mentioned application are incorporated herein by reference.

### FIELD

The present disclosure relates to the field of data processing, and in particular, to an image processing method, apparatus, and device, and a storage medium.

### BACKGROUND

With the development of e-commerce platforms, an increasing number of people choose online shopping. In order to display and promote products, merchants display effects of the products by shooting a real model. For example, the merchants shoot product effect images of the real model wearing clothing and jewelry to display and promote the products.

However, the shoot of the product effect images through the real model has high shoot costs and a long cycle. Therefore, how to obtain effect images for displaying products more efficiently and conveniently is a problem to be urgently resolved currently.

### SUMMARY

To resolve the above-mentioned technical problem, embodiments of the present disclosure provide an image processing method.

According to a first aspect, the present disclosure provides an image processing method. The method includes:
identifying, in response to a preset image processing request for an image to be processed, a target object in the image to be processed;
receiving target description information corresponding to the image to be processed, and generating a target virtual image based on the target description information; and
adding the target virtual image to the image to be processed to obtain a processing result image corresponding to the image to be processed, where the processing result image displays the target object in the image to be processed.

**In** an alternative implementation, before adding the target virtual image to the image to be processed to obtain the processing result image corresponding to the image to be processed, the method further includes:
obtaining display region information of the target object in the image to be processed; and
correspondingly, adding the target virtual image to the image to be processed to obtain the processing result image corresponding to the image to be processed includes:
   adding the target virtual image to the image to be processed based on the display region information of the target object in the image to be processed to obtain the processing result image corresponding to the image to be processed.

In an alternative implementation, adding the target virtual image to the image to be processed based on the display region information of the target object in the image to be processed to obtain the processing result image corresponding to the image to be processed includes:
obtaining a partial image that is located in the image to be processed and that corresponds to the target object based on the display region information of the target object in the image to be processed; and
performing stitching processing on the target virtual image and the partial image corresponding to the target object to obtain the processing result image corresponding to the image to be processed.

In an alternative implementation, obtaining the display region information of the target object in the image to be processed includes:
performing binarization processing on the image to be processed based on an identification result of the target object to obtain a binary image corresponding to the image to be processed, where the binary image is used to identify a display region of the target object in the image to be processed.

In an alternative implementation, adding the target virtual image to the image to be processed based on the display region information of the target object in the image to be processed to obtain the processing result image corresponding to the image to be processed includes:
performing masked inpainting on the image to be processed based on the binary image corresponding to the image to be processed and the target virtual image to obtain the processing result image corresponding to the image to be processed.

In an alternative implementation, the method further includes:
inputting the binary image corresponding to the image to be processed, the processing result image, and the image to be processed into a preset edge processing model, and processing, by the preset edge processing model, an edge of the target object in the processing result image, to obtain an edge processing result image corresponding to the image to be processed.

In an alternative implementation, generating the target virtual image based on the target description information includes:
inputting the target description information into a virtual image generation model, and processing, by the virtual image generation model, the input target description information, to generate the target virtual image, where the virtual image generation model is obtained through training by using virtual image samples that have text description information.

In an alternative implementation, before identifying the target object in the image to be processed, the method further includes:
performing image quality compression processing on the image to be processed;
and/or performing sampling processing on length-width pixels of the image to be processed.

According to a second aspect, the present disclosure provides an image processing apparatus. The apparatus includes:
an identification module configured to identify, in response to a preset image processing request for an image to be processed, a target object in the image to be processed;
a generation module configured to receive target description information corresponding to the image to be processed, and generate a target virtual image based on the target description information, where the target description information is used to describe features of the target virtual image; and
an adding module configured to add the target virtual image to the image to be processed to obtain a processing result image corresponding to the image to be processed, where the processing result image is used to display the target object based on the target virtual image.

According to a third aspect, the present disclosure provides a computer-readable storage medium having instructions stored therein, where the instructions, when executed on a terminal device, cause the terminal device to implement the method described above.

According to a fourth aspect, the present disclosure provides an image processing device. The device includes: a memory, a processor, and a computer program that is stored in the memory and executable on the processor, where the processor, when executing the computer program, implements the method described above.

According to a fifth aspect, the present disclosure provides a computer program product including a computer program/instructions, where the computer program/instructions, when executed by a processor, cause the method described above to be implemented.

### BRIEF DESCRIPTION OF THE DRAWINGS

The drawings herein are incorporated into the specification and constitute a part of the specification, illustrate embodiments that conform to the present disclosure, and are used together with the specification to explain the principles of the present disclosure.

In order to more clearly illustrate the technical solutions in the embodiments of the present disclosure or in the related art, the drawings for describing the embodiments or the related art are briefly described below. Apparently, a person of ordinary skill in the art may still derive other drawings from the drawings without creative efforts.
FIG. 1 is a flowchart of an image processing method according to an embodiment of the present disclosure;
FIG. 2 is a schematic diagram of an interaction interface for selecting avatar feature tags according to an embodiment of the present disclosure;
FIG. 3 is a schematic diagram of a binary image according to an embodiment of the present disclosure;
FIG. 4 is a schematic diagram of an interaction interface according to an embodiment of the present disclosure;
FIG. 5 is a schematic diagram of another interaction interface according to an embodiment of the present disclosure;
FIG. 6 is a schematic diagram of data interaction according to an embodiment of the present disclosure;
FIG. 7 is a schematic structural diagram of an image processing apparatus according to an embodiment of the present disclosure; and
FIG. 8 is a schematic structural diagram of an image processing device according to an embodiment of the present disclosure.

### DETAILED DESCRIPTION OF EMBODIMENTS

**In** order to understand the above-mentioned objectives, features and advantages of the present disclosure more clearly, the solutions of the present disclosure are further described below. It should be noted that embodiments of the present disclosure and features in the embodiments may be combined with each other without conflict.

Many specific details are set forth in the following description to facilitate a full understanding of the present disclosure. However, the present disclosure may also be implemented in other manners different from those described herein. Apparently, the embodiments in the description are only some rather than all of the embodiments of the present disclosure.

**In** the field of e-commerce, new products need to be constantly added. In order to facilitate display and promotion of a product, the product is often displayed through shoot of a product effect image of a real model wearing the product. However, the above-mentioned manner has high shoot costs and a long cycle, which cannot meet a demand of a merchant user for efficiently and conveniently obtaining the product effect image.

Therefore, the embodiments of the present disclosure provide an image processing method. First, in response to a preset image processing request for an image to be processed, a target object in the image to be processed is identified; target description information corresponding to the image to be processed is received, and a target virtual image is generated based on the target description information, where the target description information is used to describe features of the target virtual image; and then the target virtual image is added to the image to be processed to obtain a processing result image corresponding to the image to be processed, where the processing result image is used to display the target object based on the target virtual image. In the embodiments of the present disclosure, the target virtual image is generated for the target object based on the target description information, and the image to be processed is processed into the processing result image that displays the target object based on the target virtual image. It can be learned that, in the embodiments of the present disclosure, an effect image for displaying the target object is generated more efficiently and conveniently through image processing without shooting a real model, which meets the user demand.

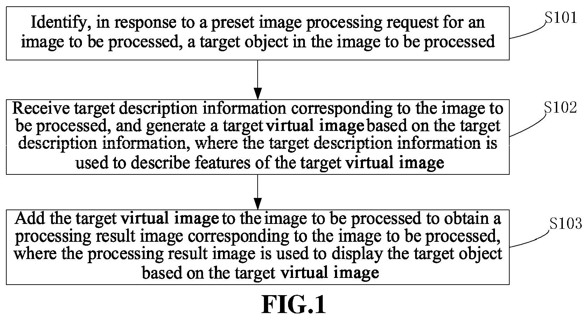

Based on this, an embodiment of the present disclosure provides an image processing method. FIG. 1 is a flowchart of an image processing method according to an embodiment of the present disclosure. The method specifically includes the following steps.

S101: A target object in the image to be processed is identified, in response to a preset image processing request for an image to be processed.

The image to be processed may be selected from a user album and then uploaded, or may be obtained by shooting and uploaded, which is not limited in this embodiment of the present disclosure. The target object is displayed in the image to be processed. The target object may be a displayable item, for example, clothing, jewelry, a backpack, or glasses, etc.

The image processing method provided in this embodiment of the present disclosure may be applied to a server.

In this embodiment of the present disclosure, when the preset image processing request for the image to be processed is received from a client, first, the target object in the image to be processed is identified. The preset image processing request is used to request the server to perform preset processing on the target object in the image to be processed.

S102: Target description information corresponding to the image to be processed is received, and a target virtual image based on the target description information is generated.

In this embodiment of the present disclosure, the target description information is used to describe features of the target virtual image, and may include appearance feature description information, expression description information, etc. for the target virtual image. In addition, the target description information may further include scene description information, and environment description information, such as indoor and outdoor scene feature information.

In an alternative implementation, the target description information may be feature information customized by a user. Specifically, the user customization is implemented in a manner of selecting avatar feature tags on an interaction interface.

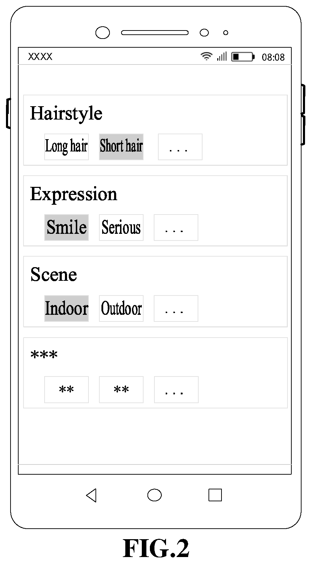

FIG. 2 is an interaction interface for selecting avatar feature tags according to an embodiment of the present disclosure. Specifically, a plurality of selectable facial feature tags of a virtual image and a plurality of selectable scene feature tags are displayed on the interaction interface. The user may customize the avatar feature tags of the target virtual image by tapping tags on the interaction interface, and the user may customize virtual images in different styles according to actual needs, which can be used to enhance the display effect of the target object.

As shown in FIG. 2, the avatar feature tags currently selected by the user include: short hair, smile, indoor, etc. Correspondingly, the target description information corresponding to the image to be processed includes: short hair, smile, indoor, etc.

In this embodiment of the present disclosure, after receiving the avatar feature tags selected by the user, the client sends description information corresponding to the selected avatar feature tags to the server as the target description information corresponding to the image to be processed. After receiving the target description information corresponding to the image to be processed, the server generates the target virtual image based on the target description information. The target virtual image may be generated by an artificial intelligence model, and has a face and a body that closely resemble those of a real person.

In an alternative implementation, generating the target virtual image based on the target description information may specifically be generating the target virtual image meeting description features of the target description information based on the target description information by using the artificial intelligence model. Specifically, the artificial intelligence model may be a trained virtual image generation model. Specifically, the virtual image generation model is obtained through training by using virtual image samples that have text description information.

In an application process of the virtual image generation model, the target description information is input into the virtual image generation model, and then is processed by the virtual image generation model, to generate the target virtual image.

S103: The target virtual image is added to the image to be processed to obtain a processing result image corresponding to the image to be processed,
where the processing result image is used to display the target object based on the target virtual image, and the target object in the image to be processed is displayed in the processing result image.

In this embodiment of the present disclosure, first, display region information of the target object in the image to be processed needs to be obtained, and then the target virtual image is added to the image to be processed, to obtain the processing result image corresponding to the image to be processed.

The display region information of the target object in the image to be processed is used to identify a display position, a display range, etc. of the target object in the image to be processed.

In an alternative implementation, the display region information of the target object in the image to be processed may include coordinate information of a region occupied by the target object in the image to be processed, for example, coordinate information of edge pixels of the region occupied by the target object in the image to be processed.

In another alternative implementation, the display region information of the target object in the image to be processed may be segmenting the target object and other content (also referred to as background content) other than the target object in the image to be processed by using an image segmentation model, and then generating a binary image (e.g., a grayscale image) through binarization processing, where the binary image is used to identify the display region information of the target object in the image to be processed.

In this embodiment of the present disclosure, binarization processing is performed on the image to be processed based on an identification result of the target object to obtain a binary image corresponding to the image to be processed, where the binary image is used to identify a display region of the target object in the image to be processed.

For example, in the binary image, pixels of the region occupied by the target object are set to a pixel value corresponding to black, and pixels of parts of the image other than the target object are set to a pixel value corresponding to white. Specifically, this embodiment of the present disclosure does not impose limitations on specific pixel values set for the pixels in the binary image.

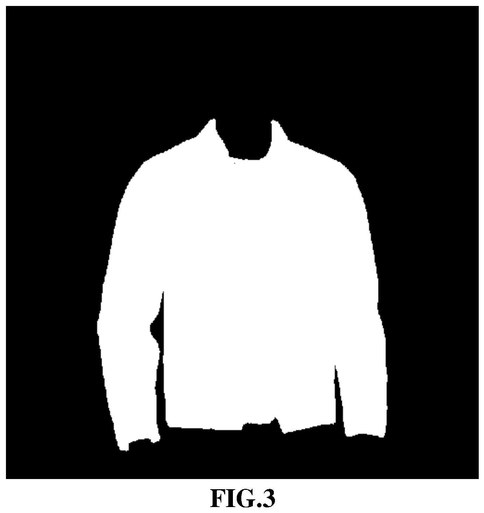

FIG. 3 is a schematic diagram of a binary image according to an embodiment of the present disclosure. Specifically, the binary image is a black-and-white grayscale image. A white region is used to identify the display region of the target object in the image to be processed.

On the basis of the above-mentioned embodiment, the target virtual image is added to the image to be processed based on the display region information of the target object in the image to be processed, to obtain the processing result image corresponding to the image to be processed.

In an alternative implementation, a partial image corresponding to the target object is obtained from the image to be processed based on the display region information of the target object in the image to be processed, and then stitching processing is performed on the target virtual image and the partial image, to obtain the processing result image corresponding to the image to be processed.

The partial image corresponding to the target object refers to a smallest image that is located in the image to be processed and that includes the target object. For example, a model wearing a long skirt (the target object) and a background image (such as in a live streaming room scene) are displayed in the image to be processed. The smallest image that is located in the image to be processed and that includes the target object is the target object itself, so the partial image corresponding to the target object refers to an image of a long skirt display region. Optionally, the stitching processing of the target virtual image and the partial image corresponding to the target object may specifically be performed by using any image processing technology, which is not limited in this embodiment of the present disclosure.

In another alternative implementation, masked inpainting may be performed on the image to be processed based on the binary image corresponding to the image to be processed and the target virtual image to obtain the processing result image corresponding to the image to be processed. In this embodiment of the present disclosure, the binary image is used as a mask, and the target virtual image is drawn in a region outside the display region of the target object identified in the binary image.

In the embodiments of the present disclosure, in response to the preset image processing request for the image to be processed, the target object in the image to be processed is identified; the target description information corresponding to the image to be processed is received, and the target virtual image is generated based on the target description information, where the target description information is used to describe the features of the target virtual image; and the target virtual image is added to the image to be processed to obtain the processing result image corresponding to the image to be processed, where the processing result image is used to display the target object based on the target virtual image. In the embodiments of the present disclosure, the target virtual image is generated for the target object based on the target description information, and the image to be processed is processed into the processing result image that displays the target object based on the target virtual image. It can be learned that, in the embodiments of the present disclosure, an effect image for displaying the target object is generated more efficiently and conveniently through image processing without shooting a real model, which meets the user demand.

In practical application, since a stitched edge of the processing result image obtained after the stitching processing is performed on the target virtual image and the partial image corresponding to the target object may have a poor edge fusion effect, to further improve the quality of the processed image, in this embodiment of the present disclosure, edge processing may further be performed on the stitched edge of the processing result image corresponding to the image to be processed.

Specifically, edge identification is performed on the target object in the image to be processed based on the display region information of the target object in the image to be processed to obtain an edge identification result, and then edge processing is performed on the processing result image corresponding to the image to be processed based on the edge identification result, so that a stitched edge effect of the target virtual image and the target object in the processing result image after the edge processing is more realistic.

In an alternative implementation, the binary image corresponding to the image to be processed, the processing result image, and an original image of the image to be processed are input into a preset edge processing model, and are then processed by the preset edge processing model, to obtain an edge processing result image corresponding to the image to be processed. Specifically, the preset edge processing model processes an edge of the target object in the processing result image, so that the stitched edge effect of the target virtual image and the target object is more realistic.

In another alternative implementation, edge detection and identification may be performed by a neural network model on the target object in the image to be processed based on the display region information of the target object in the image to be processed, to obtain an edge identification result, and then edge processing may be performed on the processing result image corresponding to the image to be processed based on the edge identification result. A specific type of the neural network model is not limited.

In this embodiment of the present disclosure, the edge processing is performed on the processing result image corresponding to the image to be processed, so that the stitched edge of the target object and the target virtual image in the processing result image is softer and smoother, and is closer to a real image, thereby improving the quality of the generated image.

In practical application, in order to improve image processing efficiency, image quality compression processing and processing such as sampling of a number of length-width pixels of the image may be performed on the image to be processed, to improve the image processing efficiency by reducing the image quality. In this embodiment of the present disclosure, when the preset image processing request for the image to be processed is received, the image quality compression processing is performed on the image to be processed, and/or sampling processing is performed on the length-width pixels of the image to be processed. By appropriately compressing the image quality of the image to be processed, an amount of computation of the server for the image processing is reduced, speed of image generation is increased, and the image processing efficiency is improved.

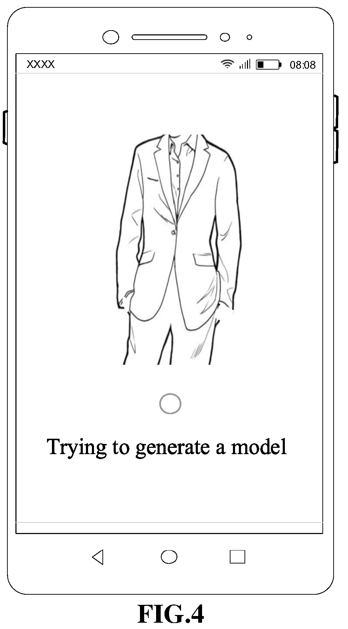

In order to facilitate understanding of the above-mentioned embodiment, in the embodiments of the present disclosure, the above-mentioned embodiment is described from a client perspective. FIG. 4 is a schematic diagram of an interaction interface according to an embodiment of the present disclosure. First, after receiving target description information determined by a user based on the interface shown in FIG. 2, a client uploads the target description information to a server. In addition, after the user uploads an image to be processed (it is assumed that the image to be processed is an on-model shot) to the server through the interaction interface, an interface state shown in FIG. 4 is displayed on the interaction interface, and prompt information that indicates waiting for the server to process the image, for example, "trying to generate a model", is presented.

After receiving a preset image processing request from the client, the server performs image quality compression processing on the received image to be processed, then identifies a target object, and performs segmentation processing on the target object (clothing) and background content in the image to be processed based on an identification result. For example, binarization processing is performed on the image to be processed, to obtain a black-and-white grayscale image. The black-and-white grayscale image is used to identify display region information of the target object (the clothing) in the image to be processed.

The server may use the black-and-white grayscale image as a mask and draw a target virtual image based on the target description information, to obtain a processing result image corresponding to the image to be processed, that is, the processing result image that displays the target object based on the target virtual image.

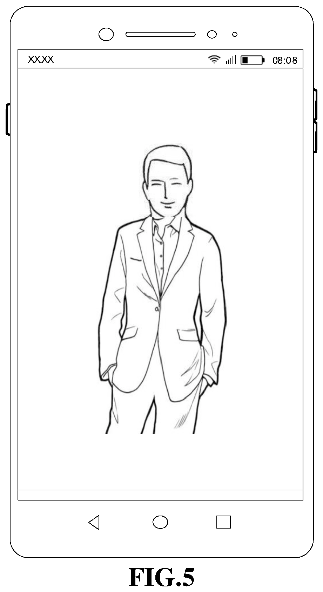

After completing processing of the image to be processed, the server transmits the generated processing result image back to the client. After receiving the processing result image, the client displays the processing result image on the interaction interface, as shown in FIG. 5, which is a schematic diagram of another interaction interface according to an embodiment of the present disclosure. The interaction interface displays an image that displays the target object (the clothing) based on the target virtual image (a model).

When the server performs stitching processing on the target virtual image and the target object based on display region information of the target object in the image to be processed, the obtained processing result image may have a poor edge processing effect. In order to make an edge of the processing result image smoother, the server may further perform edge processing on the processing result image, and then transmit the processing result image after edge processing to the client. The client displays the processing result image on the interaction interface for the user to view.

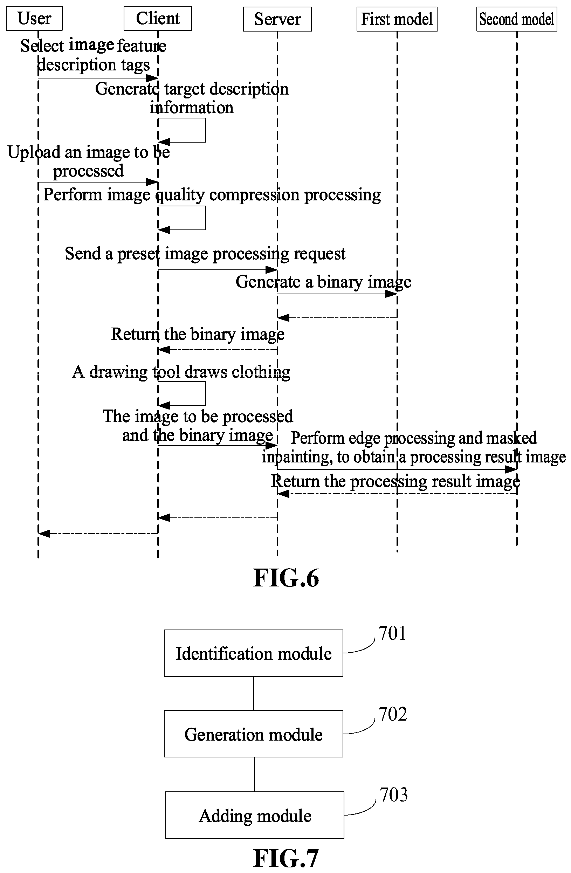

In order to facilitate further understanding of the image processing method provided by the embodiments of the present disclosure for the user, an embodiment of the present disclosure provides a specific application method. FIG. 6 is a data interaction diagram according to an embodiment of the present disclosure. Specifically, the image processing method in this embodiment of the present disclosure may be implemented based on data interaction between the client and the server. A trained first model and a trained second model are deployed at the server.

First, the user selects avatar feature tags on the interaction interface of the client, and then the client forms target description information based on the avatar feature tags customized and selected by the user, and sends the target description information to the server. The user uploads an image to be processed (it is assumed that the image to be processed is an on-model shot) through the client, and sends a preset image processing request for the image to be processed to the server.

After receiving the preset image processing request from the client, the server identifies a target object (clothing) in the image to be processed by using the first model, performs binarization processing on the image to be processed based on an identification result of the target object, to obtain a binary image corresponding to the image to be processed, and uses the binary image as a mask. In order to enable the user to perceive an operation progress of the image processing and enhance human-computer interaction experience, an image that is obtained through processing based on the binary image corresponding to the image to be processed and that merely displays the target object may be transmitted to the client first. After the client receives the image, the image is displayed on the client.

In order to avoid the problem of slow operation speed as a result of large processing logics and a case in which the entire processing process may stop operating as a result of a vulnerability in one of the processing logics, interfaces may be deployed separately for different logical units during the application. For example, an interface may be deployed separately for edge processing of the image to be processed. In practical application, an implementation architecture deployment manner of the server is not limited in this embodiment of the present disclosure.

As shown in FIG. 6 described above, the client resends the image to be processed and the binary image corresponding to the image to be processed to the server through a separate interface. Then after receiving the image to be processed and the binary image corresponding to the image to be processed, the server performs edge processing on the image to be processed through the second model based on the binary image corresponding to the image to be processed and a target virtual image, to obtain a processing result image corresponding to the image to be processed. Finally, the image to be processed is transmitted back to the client, and is displayed on the client.

Based on the above-mentioned method embodiment, an embodiment of the present disclosure further provides an image processing apparatus. FIG. 7 is a schematic structural diagram of an image processing apparatus according to an embodiment of the present disclosure. The apparatus includes:
an identification module 701 configured to identify, in response to a preset image processing request for an image to be processed, a target object in the image to be processed;
a generation module 702 configured to receive target description information corresponding to the image to be processed, and generate a target virtual image based on the target description information, where the target description information is used to describe features of the target virtual image; and
an adding module 703 configured to add the target virtual image to the image to be processed to obtain a processing result image corresponding to the image to be processed, where the processing result image is used to display the target object based on the target virtual image.

In an alternative implementation, the apparatus further includes:
a first obtaining module configured to obtain display region information of the target object in the image to be processed; and
correspondingly, the adding module is specifically configured to:
   add the target virtual image to the image to be processed based on the display region information of the target object in the image to be processed to obtain the processing result image corresponding to the image to be processed.

In an alternative implementation, the adding module includes:
a first obtaining sub-module configured to obtain a partial image that is located in the image to be processed and that corresponds to the target object based on the display region information of the target object in the image to be processed; and
a first stitching sub-module configured to perform stitching processing on the target virtual image and the partial image corresponding to the target object to obtain the processing result image corresponding to the image to be processed.

In an alternative implementation, the first obtaining module is specifically configured to:
perform binarization processing on the image to be processed based on an identification result of the target object to obtain a binary image corresponding to the image to be processed, where the binary image is used to identify a display region of the target object in the image to be processed.

In an alternative implementation, the adding module is specifically configured to:
perform masked inpainting on the image to be processed based on the binary image corresponding to the image to be processed and the target virtual image to obtain the processing result image corresponding to the image to be processed.

In an alternative implementation, the apparatus further includes:
an edge processing module configured to input the binary image corresponding to the image to be processed, the processing result image, and the image to be processed into a preset edge processing model, and process, by the preset edge processing model, an edge of the target object in the processing result image, to obtain an edge processing result image corresponding to the image to be processed.

In an alternative implementation, the generation module is specifically configured to:
input the target description information into a virtual image generation model, and process, by the virtual image generation model, the input target description information, to generate the target virtual image, where the virtual image generation model is obtained through training by using virtual image samples that have text description information.

In an alternative implementation, the apparatus further includes:
an image processing module configured to perform image quality compression processing on the image to be processed;
and/or an image sampling module configured to perform sampling processing on length-width pixels of the image to be processed.

In the image processing method provided in the embodiments of the present disclosure, first, in response to the preset image processing request for the image to be processed, the target object in the image to be processed is identified; the target description information corresponding to the image to be processed is received, and the target virtual image is generated based on the target description information, where the target description information is used to describe the features of the target virtual image; and then the target virtual image is added to the image to be processed, to obtain the processing result image corresponding to the image to be processed, where the processing result image is used to display the target object based on the target virtual image. In the embodiments of the present disclosure, the target virtual image is generated for the target object based on the target description information, and the image to be processed is processed into the processing result image that displays the target object based on the target virtual image. It can be learned that, in the embodiments of the present disclosure, an effect image for displaying the target object is generated more efficiently and conveniently through image processing without shooting a real model, which meets the user demand.

In addition to the method and the apparatus described above, an embodiment of the present disclosure further provides a computer-readable storage medium having instructions stored therein, where the instructions, when executed on a terminal device, cause the terminal device to implement the image processing method described in the embodiments of the present disclosure.

An embodiment of the present disclosure further provides a computer program product including a computer program/instructions, where the computer program/instructions, when executed by a processor, cause the image processing method described in the embodiments of the present disclosure to be implemented.

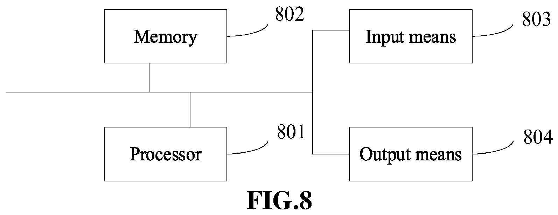

In addition, an embodiment of the present disclosure further provides an image processing device. As shown in FIG. 8, the device may include:
a processor 801, a memory 802, an input means 803, and an output means 808. There may be one or more processors 801 in the image processing device. For example, there is one processor in FIG. 8. In some embodiments of the present disclosure, the processor 801, the memory 802, the input means 803, and the output means 808 may be connected through a bus or in another manner, for example, are connected through the bus in FIG. 8.

The memory 802 may be configured to store a software program and a module. The processor 801 performs various functional applications of the image processing device and processes data by executing the software program and the module stored in the memory 802. The memory 802 may mainly include a program storage area and a data storage area. The program storage area may store an operating system, an application required by at least one function, and the like. In addition, the memory 802 may include a high-speed random-access memory, and may further include a non-volatile memory, such as at least one magnetic disk storage device, a flash memory device, or other volatile solid-state storage devices. The input means 803 may be configured to receive entered numerical or character information, and generate a signal input related to a user setting and function control of the image processing device.

Specifically, in this embodiment, the processor 801 loads an executable file corresponding to a process of one or more applications into the memory 802 in accordance with the following instructions, and the processor 801 executes the application stored in the memory 802, to implement various functions of the image processing device.

It should be noted that the relational terms such as "first" and "second" herein are only used to distinguish one entity or operation from another, and do not necessarily require or imply that any actual relationship or sequence exists between these entities or operations. Moreover, the terms "include", "including", "comprise" and "comprising", or any of their variants are intended to cover a non-exclusive inclusion, so that a process, method, article, or device that includes a list of elements not only includes those elements but also includes other elements that are not expressly listed, or further includes elements inherent to such process, method, article, or device. In the absence of more restrictions, an element defined by "including/comprising a/an ..." does not exclude another identical element in a process, method, article, or device that includes the element.

The above-mentioned description illustrates merely specific implementations of the present disclosure, so that those skilled in the art can understand or implement the present disclosure. Various modifications to these embodiments are apparent to those skilled in the art, and the general principle defined herein may be practiced in other embodiments without departing from the spirit or scope of the present disclosure. Therefore, the present disclosure will not be limited to the embodiments described herein, but extends to the widest scope that complies with the principles and novelty disclosed in this specification.

## Claims

1. An image processing method, comprising:
identifying, in response to a preset image processing request for an image to be processed, a target object in the image to be processed;
receiving target description information corresponding to the image to be processed, and generating a target virtual image based on the target description information, wherein the target description information is used to describe features of the target virtual image; and
adding the target virtual image to the image to be processed to obtain a processing result image corresponding to the image to be processed, wherein the processing result image is used to display the target object based on the target virtual image.

2. The method according to claim 1, wherein before adding the target virtual image to the image to be processed to obtain the processing result image corresponding to the image to be processed, the method further comprises:
obtaining display region information of the target object in the image to be processed; and
correspondingly, adding the target virtual image to the image to be processed to obtain the processing result image corresponding to the image to be processed comprises:
adding the target virtual image to the image to be processed based on the display region information of the target object in the image to be processed to obtain the processing result image corresponding to the image to be processed.

3. The method according to claim 2, wherein adding the target virtual image to the image to be processed based on the display region information of the target object in the image to be processed to obtain the processing result image corresponding to the image to be processed comprises:
obtaining a partial image that is located in the image to be processed and that corresponds to the target object based on the display region information of the target object in the image to be processed; and
performing stitching processing on the target virtual image and the partial image corresponding to the target object to obtain the processing result image corresponding to the image to be processed.

4. The method according to claim 2, wherein obtaining the display region information of the target object in the image to be processed comprises:
performing binarization processing on the image to be processed based on an identification result of the target object to obtain a binary image corresponding to the image to be processed, wherein the binary image is used to identify a display region of the target object in the image to be processed.

5. The method according to claim 4, wherein adding the target virtual image to the image to be processed based on the display region information of the target object in the image to be processed to obtain the processing result image corresponding to the image to be processed comprises:
performing masked inpainting on the image to be processed based on the binary image corresponding to the image to be processed and the target virtual image to obtain the processing result image corresponding to the image to be processed.

6. The method according to claim 4, further comprising:
inputting the binary image corresponding to the image to be processed, the processing result image, and the image to be processed into a preset edge processing model, and processing, by the preset edge processing model, an edge of the target object in the processing result image, to obtain an edge processing result image corresponding to the image to be processed.

7. The method according to claim 1, wherein generating the target virtual image based on the target description information comprises:
inputting the target description information into a virtual image generation model, and processing, by the virtual image generation model, the input target description information, to generate the target virtual image, wherein the virtual image generation model is obtained through training by using virtual image samples that have text description information.

8. The method according to claim 1, wherein before identifying the target object in the image to be processed, the method further comprises:
performing image quality compression processing on the image to be processed; and/or
performing sampling processing on length-width pixels of the image to be processed.

9. An image processing apparatus, comprising:
an identification module configured to identify, in response to a preset image processing request for an image to be processed, a target object in the image to be processed;
a generation module configured to receive target description information corresponding to the image to be processed, and generate a target virtual image based on the target description information, wherein the target description information is used to describe features of the target virtual image; and
an adding module configured to add the target virtual image to the image to be processed to obtain a processing result image corresponding to the image to be processed, wherein the processing result image is used to display the target object based on the target virtual image.

10. A computer-readable storage medium having instructions stored therein that, when executed on a terminal device, cause the terminal device to implement the method according to any of claims 1 to 8.

11. An image processing device, comprising:
a memory;
a processor; and
a computer program that is stored in the memory and executable on the processor, wherein the processor, when executing the computer program, implements the method according to any of claims 1 to 8.
